Europäisches Patentamt

(19) **European Patent Office**

Office européen des brevets

(11) Publication number: **0 011 395**

**A1**

(12) # EUROPEAN PATENT APPLICATION

(21) Application number: **79302284.9**

(22) Date of filing: **19.10.79**

(51) Int. Cl.³: **G 07 F 17/34**

(30) Priority: **20.10.78 GB 4135378**

(43) Date of publication of application:
**28.05.80 Bulletin 80/11**

(84) Designated Contracting States:
**AT BE CH DE FR IT LU NL SE**

(71) Applicant: **SUREVILLE LIMITED**
**Kayley Industrial Estate Richmond Street**
**Ashton-under-Lyne Lancashire OL7 0AU(GB)**

(72) Inventor: **Marshall, John Corrigan**
**Northgate House, Honley**
**Huddersfield, Yorkshire(GB)**

(72) Inventor: **Rock, Brian**
**104 Tennyson Avenue**
**Dukinfield, Cheshire(GB)**

(74) Representative: **Funge, Harry et al,**
**SYDNEY E. M'CAW & CO Saxone House 52-56 Market**
**Street**
**Manchester M1 1PP(GB)**

(54) A rotatably mounted member and an entertainment machine comprising such.

㊵ A member, particularly a reel of a fruit machine, is rotatable through a number of predetermined stopping positions. The member is rotated with an electric motor and can be stopped in registration with any one of the stopping positions by means of an indexing device, comprising, for example, a finger (10) of pawl (33) which is engageable with teeth (7 or 32) around the periphery of the member.

The electric motor is integrated with the member. For example, the member may comprise a metal disc (6) which forms the rotor of a rotary linear motor.

FIG.2

EP 0 011 395 A1

(EP12073)  — 1 —
(17.10.79)

## ROTATABLY MOUNTED MEMBER

This invention relates to a member which is mounted on a support structure so as to be rotatable relative thereto through a plurality of predetermined stopping positions. The invention is more particularly although not exclusively, concerned with such a rotatably mounted member which is a reel assembly of a gaming-type entertainment machine of the kind known as a fruit machine, that is a rotatably mounted member in which the member is a drum or disc which in use is provided with a plurality of symbols, such as fruit, around the periphery thereof and can be rotated for a period of time and then brought to rest at one of say 20 stopping positions thereof to display in such stopping position one or more of said symbols.

A fruit machine usually has three or four such reel assemblies and in use, during play of a game, the drums or discs may rotate for different random periods of time and display when stopped a randomly selected combination of symbols. With this arrangement, for rotating the different discs or drums it is known to connect the discs or drums via slipping clutches to the drive shaft of a common electric motor. The drums or discs have teeth around the periphery of same and stopping of each disc or drum in precise registration with one of the 20 stopping positions thereof is effected by means of a

0011395

respective solenoid operated indexing device which moves an arresting pawl into engagement with the teeth. With this known arrangement, the requisite clutch arrangement and motor drive is particularly complex and expensive to manufacture. Also, and particularly having regard to the interconnection of the different discs and drums via the common drive arrangement, repair and maintenance work and replacement of component parts can be different or inconvenient.

It is also known to use an arrangement of independently rotatable drums or discs with a respective drive device for each such drum or disc comprising a solenoid operated pawl mechanism engageable with teeth on the periphery of the drum or disc. Each drum or disc is set in motion by pulling the respective pawl sharply away from the teeth so that a tangential impulse is applied to the drum or disc, and stopping of the drum or disc is effected by release of the pawl such that it moves back into arresting engagement with the teeth (in like manner to the above described indexing device). With this arrangement, however, the solenoids apply large thrusts to the drums or discs which may cause undue wear in the rotary bearings or mountings thereof. Also, the solenoids require a high operating current and any fluctuation in the power supply may introduce an element of uncertainty into the operation of the solenoid drive. Such uncertainty may be particularly undesirable in a fruit machine having a 'nudge' facility, that is, in which a control is provided for causing a stationary disc or drum to advance from one stopping position to the next successive stopping position.

An object of the present invention is to provide an improved drive means for a rotatably mounted member.

According to the invention therefore there is provided a rotatably mounted member comprising a member which is mounted on a support structure so as to be rotatable relative thereto through a plurality of predetermined stopping positions, an electrical drive motor being provided for effecting said rotation of the member, and indexing means being provided for stopping the member in one of said stopping positions thereof, characterised in that said drive motor is an integral part of the rotatably mounted member.

With this arrangement, due to incorporation of the motor in the rotatably mounted member it will be appreciated that it is possible to achieve a smooth, even drive with low power consumption, yet maintenance and manufacture can be much simplified in so far as the rotatably mounted member incorporating the drive means can represent an independent unit which does not require the use of clutches or other drive transmission devices to connect same to other rotatably mounted members or to a separate drive source.

Most preferably, and in order to achieve optimum simplicity and reliability of construction, the motor is direct-coupled to the member, that is, without the intermediary of any geared drive connection or other drive-modifying coupling; and also, the motor may be incorporated directly in the rotatably mounted member, that is, such that the motor is not a separately housed and mounted unit but utilises structural parts of the rotatably mounted member as structural parts of the motor.  In a particularly preferred embodiment, the

(EP12073)                    — 4 —
(17.10.79)

motor has a rotor and a stator, one of the rotor and
stator being mounted on or forming part of the said
support structure, and the other of said rotor and stator
being secured to or forming part of the said member.

The motor may be of any suitable mode of operation.
Preferably however the motor is a rotary linear motor,
that is a motor having a metal rotor in the form of a
disc or cylinder and a fixed coil structure which is
positioned alongside a surface of the rotor and in use
generates a magnetic field moving in the plane of such
surface.

With regard to the said indexing means, this may
take any suitable form and thus for example may comprise
an indexing device of the known kind hereinbefore
described having a solenoid operated pawl engageable
with teeth around the periphery of the member.  Such
teeth may be provided on the member itself or may be on
a disc or other structure connected to the member so
as to be rotatable therewith, which disc or other
structure may constitute the rotor of the motor.  Instead
of using such indexing device, however, it is possible
to provide a pawl which is positioned to engage teeth
around the member, which pawl permits rotation of the
member in a forward direction but prevents movement in
a reverse direction, and the member is urged in the
rearward direction on stopping thereof.  Thus, the
teeth may be ratchet teeth and urging the member in the
reverse direction of rotation may be effected by a
mechanical device (such as spring means) or may involve
reverse energisation of the motor.

The rotatably mounted member of the invention may be used for any suitable purpose but is most preferably
used as a reel assembly in an entertainment machine
especially a fruit machine as hereinbefore described.
With such a reel assembly it is necessary to provide
machine interpretable information as to the position of
the member when stopped in order that it can be determined, using an appropriate evaluation system, as to
whether or not the displayed symbols of a plurality of
such reel assemblies define a winning combination. This
may be effected using light sensors and light sources for
reading coded light transmitting regions (such as holes
or reflective portions) on the members of the reel
assemblies for example in the manner described in
British Patent No. 1,368,622 and pending British
Applications Nos. 7968/76 and 8506/77. The code reading
systems as specifically described in such Patent and
Applications may use, for each member, a single light
source and a bank of light sensors, whereby a particular
combination of sensors are simultaneously illuminated
for each stopping position. If desired however a code
reading system may be used which involves a bank of
light sources and a single sensor, the light sources
being activated serially at each stopping position
whereby the sensor is energised serially in a particular
pattern dependent on the particular combination of light
sources capable of transmitting light to the sensor at
the stopping position.

The invention will now be described further by way
of example only and with reference to the accompanying
drawings in which:-

Fig. 1      is a diagrammatic perspective view of a
            fruit machine incorporating rotatably mounted
            members according to one form of the invention which are reel assemblies of the
machine;

Fig. 2      is a diagrammatic sectional view of one of
the reel assemblies;

Fig. 3      is a diagrammatic elevational view of the reel
assembly of Fig. 2 with parts omitted for the
sake of clarity;

Fig. 4      is a view corresponding to Fig. 3 of part
of a modified version of the reel assembly;

Fig. 5      is a circuit diagram of the fruit machine.

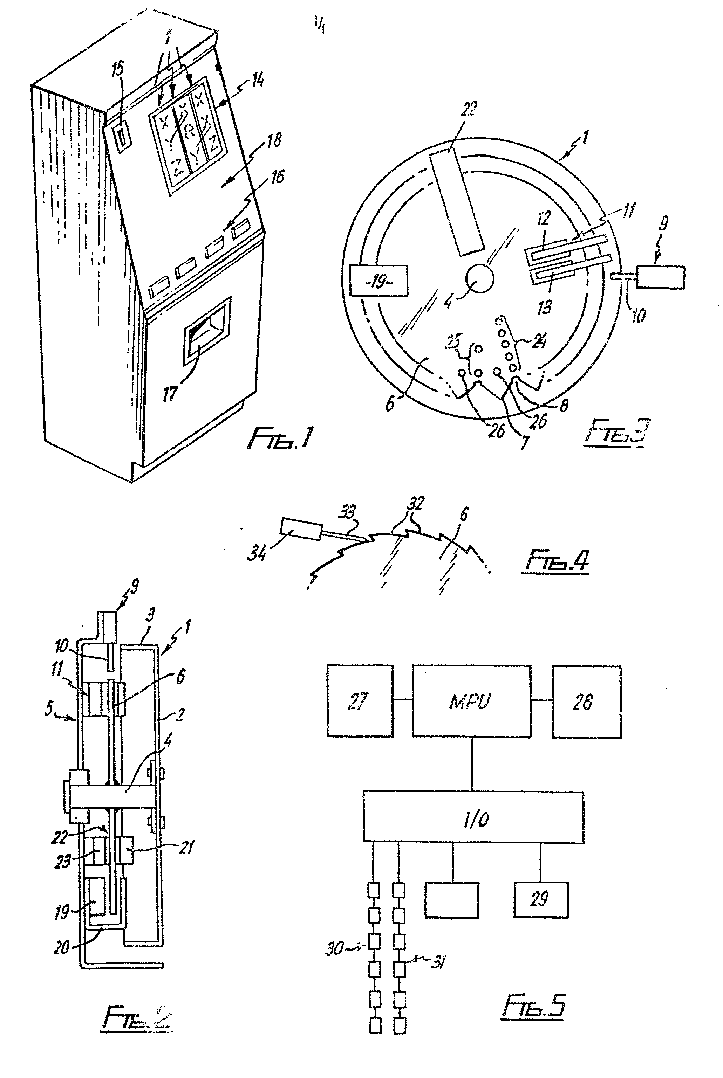

The  reel assembly of Figs. 2 and 3 comprises a drum 1
which may be formed from plastics material and has one
circular end wall 2 and a cylindrical peripheral wall 3.

The drum 1 is secured to an axially extending shaft
4 and such shaft 4 is rotatably mounted on and retained
axially relative to a support structure 5.  This structure
5 may be in the form of a rigid metal plate extending
parallel to the wall 2 of the drum 1.  Within the
drum 1, a metal disc 6 is fixed on the shaft 4 and extends
parallel to the end wall 2.  The disc 6 as shown in Fig.
3 has 20 V-shaped teeth 7 cut at regular intervals
around its entire periphery, 20 V-shaped cut-outs 8 being
defined between the teeth 7.  An electromagnetic indexing
device 9 is mounted on the support structure 5 and
this device has a solenoid operated catch finger 10 which
is normally spaced from the teeth 7 so as to permit free
rotation of the disc 6 but which can be moved forwards,
on actuation of the solenoid of the device 9, to engage
a cut-out 8 between two teeth 7 and thereby prevent
rotation of the disc 6.

A coil arrangement 11 is also mounted on the support structure 5 adjacent the disc 6.  The coil arrangement 11 comprises two separate coils 12, 13 spaced in the circumferential direction of the disc and each having a respective metal core straddling the disc.  A capacitor (not shown) is connected to one coil so that, on a.c. energisation of the coils, there is a phase difference between the currents flowing in the two coils and the resulting side-by-side out-of-phase magnetic fluxes give the effect of a magnetic field which moves tangentially or circumferentially in the plane of the disc 6 whereby the disc 6 and coil arrangement 11 define a rotary linear motor.  The disc 6 is urged in one particular direction.  By reversing the connection of one coil, the direction of rotation of the disc 6 can be reversed.  A permanent magnet 19 is also mounted on the structure 5 alongside the disc 6.  One pole of the magnet faces the disc and the other pole is exposed to the opposite face of the disc 6 via a metal stirrup 20 straddling the disc.  Rotation of the disc gives rise to induction of eddy currents therein due to the action of the magnet and the resulting magnetic field interacts with the magnetic field of the magnet to resist rotation of the disc.

The drum 1 has symbols at 20 positions around the outer surface of the cylindrical wall 3 and a plurality (say three or four) of like reel assemblies are mounted on a support framework (not shown) in axial alignment behind a window 14 in a fruit machine housing (as shown in Fig. 1) so that, when the drums 1 are at rest, at least one symbol (as shown 3 symbols) from each drum 1 are displayed through the window 14.  The fruit machine also has a slot 15 leading to a coin or token mechanism operating controls 16, a pay-out aperture 17, and a front display area 18 incorporating display lamps (not shown).

(EP12073)                           - 8 -
(17.10.79)

The reel assemblies and also the coin or token mechanism,
the controls 16, the display lamps, and other devices
and mechanisms such as pay-out solenoids, the device 9,
the coil arrangement 11 and a position detection system
yet to be described are connected to control circuitry
described hereinafter with reference to Fig. 5. In use,
after insertion of one or more coins or tokens into the
slot 15 to actuate the machine, a player can energise
the coil arrangements 11 of the different reel
assemblies, by operating the appropriate control 16, to
cause the discs and hence the drums 1 to rotate in a
predetermined forward direction. After a different random
period of time for each reel assembly, forward energisation of the coil arrangement 11 ceases, the solenoid of
the device 9 is actuated to cause the finger 10 to engage
the teeth 7 and the disc 6 is thereby stopped, the precise
interengagement of the finger 10 and one of the 20 cut-outs
8 ensuring that the drum is stopped in precise registration with one of the 20 predetermined stopping
positions thereof.

With this arrangement, it will be appreciated that
a smooth, even drive of the drum 1 is achieved with a
motor which has only small power consumption. The
rotatable mounting for the drum 1 can therefore give
reliable operation with a long working life even with a
simple, inexpensive construction since it does not have
to withstand large uneven forces.

Also, it will be seen that each reel assembly including
the drive for the drum 1 constitutes a structural
unit of simple form and which is separate from the other
reel assemblies in the fruit machine. Thus the reel
assembly can be manufactured and installed in a simple convenient and inexpensive manner and subsequently maintenance or repair work can be readily effected by removing the entire unit and if necessary replacing same with a new unit.

The provision of the magnet 19 ensures that the maximum rate of rotation of the drum 1 is kept to the level usual in fruit machines (say one or two revolutions per second) whilst at the same time applying little restriction to the initial rate of acceleration of the drum at the start of rotation of same. De-energisation of the coil arrangement 11 is arranged to take place slightly before actuation of the indexing device 9, and in order to ensure easy engagement of the finger 10 with a cut-out 8, the actuation of the device 9 may be effected under the control of a detection device (as described below) which detects the positioning of the cut-outs 8 relative to the finger.

On stopping of the drums 1, a 'nudge' facility may be made available on a regular or irregular random basis. In this case, when the player operates an appropriate one of the controls 16, one or more of the drums is stepped in the forward or reverse direction of rotation through one stopping position. In the case of reverse stepping, reversal of the direction of rotation is achieved with the coil arrangement 11 as described above. The use of the above-mentioned detection device to control the indexing device 9 is particularly helpful in ensuring that the drum does not overshoot during stepping.

Identification of the stopping positions of the drum 1 of each reel assembly can be effected using a code

(EP12073)                    - 10 -
(17.10.79)

reading position detection system comprising a bank of
five light sources (say LEDs) 21 mounted on one arm of
a stirrup 22 which is fixed to the support structure
5 so that the light sources extend within the drum 1
on one side of the disc 6, and a bank of light sensors
23 (such as photo-transistors) which are mounted on an
opposite arm of the stirrup on the opposite side of
the disc 6.  The light sources are aligned respectively
with the sensors.  The disc 6 is provided with a
particular arrangement of one or more holes at each
of 20 positions around same such that one such arrangement is positioned between the light sources and the
sensors in each stopping position so that light can
be transmitted from a particular combination of the
light sources through the holes to the sensors.  As can
be seen from Fig. 3, each arrangement of holes (only
two of which 24, 25 are shown) comprises a radially
extending row of a maximum of five thereof, and the
holes are positioned at appropriate ones of five
different regularly spaced circumferential portions of
the disc.  The light sources and sensors are correspondingly arranged.  The coded arrangements of holes may be
such that there is a different combination for each of the
20 stopping positions, or alternatively such that there
is a different combination for each different kind of
symbol applied to the periphery of the drum (each symbol
appearing more than once around the drum).  Adjacent each
arrangement of holes for each stopping position there
is a single hole 26, and mounted on the stirrup there
is a further light source and a further sensor on
opposite sides of the disc 6.  As the disc rotates, the
holes 26 pass between such further light source and
sensor permitting transmission of light therebetween.

The holes 26 and associated light source and sensor

(EP12073)
(17.10.79)

- 11 -

constitute the aforementioned detection device which
provides information with regard to the positioning of
the cut-outs 8 to ensure that actuation of the indexing
device 9 occurs at the appropriate time.

With the radial arrangement of the holes 24, 25 and
of the corresponding light sources 21 and sensors 23,
it will be appreciated that all holes are presented
simultaneously for code reading purposes. Thus, code
reading can be achieved whilst the drums are rotating and
accordingly it is possible to determine in advance the
identity of a symbol corresponding to a particular stopping
position before action is taken to stop the drum at such
position.

With reference to Fig. 5, it will be seen that the
electronic control circuitry of the machine utilises a
central processing unit such as a microprocessor MPU which
has connected thereto appropriate processor power supply
and auxiliary control devices 27, memory devices 28 and
an input/output interface device i/o. The interface
device is connected to input devices 29 such as the controls
16 and the coin mechanism, and to output devices such
as pay-out solenoids, indicator lamps and the like. The
device i/o is also connected to the light sources 30
and light sensors of the different reel assemblies.
For a further description of suitable electronic circuitry
reference is made to British Patent No. 1,545,301.

It is of course to be understood that the invention
is not intended to be restricted to the details of the
above embodiment which are described by way of example
only.

Thus, for example, and as shown in Fig. 4, in place of the indexing device 9 and teeth 7, it is possible to use a disc 6 which has 20 ratchet teeth 32 which are engaged by a springy pawl 33 mounted in a block 34 fixed to the support structure 5. The pawl 33 slides over the teeth 32 to permit rotation of the disc 6 in the forward direction thereof but catches against the teeth 32 to prevent rotation of the disc 6 in the reverse direction. In order to stop the disc 6 after a period of forward rotation thereof the energisation of the coil arrangement 11 is changed such as to drive the disc in the reverse direction of rotation. The disc is then arrested in precise registration with a stopping position by engagement of the pawl 33 with one tooth 32. Appropriate circuitry may be provided to ensure that the power feed to the coil arrangement is much less in the reverse direction than in the forward direction. Alternatively, the reverse power feed may be maintained the same as the forward power feed in order to give a sharp indexing action. If desired, an appropriate mechanism may lift the pawl 33 away from the teeth 32 during forward rotation of the disc 6. Such mechanism may also be utilised in the case where the reverse 'nudge' facility (reverse stepping) is to be made available.

Further, with the above described position identifying system, instead of using six sensors and light sources to read the position coding holes 24, 25 and the auxiliary holes 26, it is possible to use only five sensors/light sources, the outermost such sensor/light source being used to read both kinds of holes.

As an alternattive to the above described position identifying system, it is possible to provide a coded cluster of holes on the disc 6 for each stopping position, and, on stopping of the disc, these may be read with a single sensor on one side of the disc and a cluster of five light sources at the opposite side of the disc. The light sources are energised successively so that a serial code of impulses is produced by the sensor dependent on the presence or absence of holes aligned with the respective light sources. The reverse arrangement (i.e. five sensors and a single light source could also be used.

The above described indexing device 9 is preferably such that on actuation thereof the finger 10 is urged (for example by a spring) into engagement with the teeth 7 and deactuation is effected by energising the solenoid to hold the finger 10 away from the teeth 7, although of course if desired a reverse arrangement may be utilised. Also, the drum 1 and the disc 6 need not be mounted on the rotatable spindle 4, but instead the drum and disc may be secured to a boss which is rotatably mounted on a spindle which is non-rotatably fixed to the plate 5. Further, in an alternative more compact arrangement, the coils 12, 13 and the magnet 19 are on the other side of the disc 6 so as to lie within the confines of the drum 1.

Further, the coil arrangement 11 may have three separate coils disposed adjacent the disc 6, namely: two outer coils which are substantially identically wound coils of opposite hand interconnected via a tuning capacitor to give a singly tuned pair, and a central coil which is predominantly inductive, whereby the magnetic fluxes of the two outer coils are anti-phase to each other (180$^{\circ}$ apart) and the phase of the magnetic flux of the central coil lies between the outer coils (spaced by 90$^{\circ}$ from each coil). With this arrangement the pair of singly tuned outer coils are balanced magnetically about the single central coil so that
reversal of mutual inductance due to reversal of the
central coil (or reversal of the outer coils) cannot
detune the coil pair.  Thus, even in a system with high
mutual inductance it is possible to achieve equal
torque in opposite driving directions with a simple and
efficient arrangement.

(EP12073)
(17.10.79)

— 1 —

Claims:

1. A rotatably mounted member comprising a member which is mounted on a support structure so as to be rotatable relative thereto through a plurality of predetermined stopping positions, an electrical drive motor being provided for effecting said rotation of the member, and indexing means being provided for stopping the member in one of said stopping positions thereof, characterised in that said drive motor is an integral part of the rotatably mounted member.

2. A mounted member according to claim 1, characterised in that the motor is direct-coupled to the member.

3. A mounted member according to claim 1 or 2, characterised in that structural parts of the rotatably mounted member are used as structural parts of the motor.

4. A mounted member according to any one of claims 1 to 3, wherein the motor has a rotor and a stator, characterised in that one of said rotor (6) and stator (11) is mounted on or forms parts of the said support structure (5), and the other of said rotor (6) and stator (11) is secured to or forms parts of the said member.

5. A mounted member according to claim 4, characterised in that said member comprises a metal disc (6) which forms said rotor.

6. A mounted member according to claim 5,

(EP12073)                    - 2 -
(17.10.79)

characterised in that
a magnet (19) is positioned alongside the disc (6) to
clamp rotation thereof.


7.    A mounted member according to any one of claims
1 to 6,
characterised in that
the motor is a rotary linear motor.


8.    A mounted member according to any one of claims
1 to 7,
characterised in that
the motor is a reversible motor.


9.    A mounted member according to any one of claims
1 to 8,
characterised in that
the said indexing means (9) comprises a solenoid operated
catch finger (10) which can be moved into engagement with
teeth (7) on the member (6) to arrest rotation thereof.


10.    A mounted member according to any one of claims
1 to 8,
characterised in that
the said indexing means (9) comprises a spring pawl (33)
engageable with ratchet teeth (32) on the member (6)
to permit rotation of the member in a forward direction
but to prevent rotation thereof in a reverse direction,
means being provided to bias the member in the reverse
direction on stopping thereof.


11.    An entertainment machine
characterised in that
it comprises:  a plurality of rotatably mounted members

(EP12073)                          - 3 -
(17.10.79)

according to any one of claims 1 to 10, a position
identification system (30, 31) for identifying the
stopping positions of the respective members, and an
evaluation system (MPU) for evaluating the combination of
identified stopping positions.

12.    An entertainment machine according to claim 11,
characterised in that
the said position identifying system comprises coded
arrangements of holes (24, 25) in discs (6) of the said
members, light sensors and light sources (30, 31) being
used to read such arrangements.

13.    An entertainment machine according to claim 11 or 12,
characterised in that
it it a fruit machine.

_Fig.1_

_Fig.3_

_Fig.4_

_Fig.2_

_Fig.5_

European Patent Office

**EUROPEAN SEARCH REPORT**

Application number

EP 79 30 2284

## DOCUMENTS CONSIDERED TO BE RELEVANT

| Category | Citation of document with indication, where appropriate, of relevant passages | Relevant to claim |
|---|---|---|
| X | <u>DE - B - 1 162 116</u> (NSM-APPARATE-BAU)<br><br>* Complete document *<br><br>-- | 1-5 |
| P,E | <u>LU - A - 80 399</u> (GUNTER WULFF APPARATEBAU)<br><br>* Claims and figures * | 1-5,7, 8,11- 13 |
| E | & DE - B - 2 824 863 | |
| P,E | & BE - A - 871 570 | , |
| E | & NL - A - 79 01268<br><br>-- | |
| | <u>GB - A - 1 471 866</u> (A. SHAW)<br><br>* Page 1, line 9 - page 3, line 11; page 3, lines 52-74; figure *<br><br>---- | 1,8,11- 13 |

**CLASSIFICATION OF THE APPLICATION (Int. Cl. 3)**

G 07 F 17/34

**TECHNICAL FIELDS SEARCHED (Int.Cl. 3)**

G 07 F 17/32
17/34

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 29-01-1980 | DAVID |

EPO Form 1503.1 06.78